# FASCICULE DE BREVET EUROPEEN

(11) **EP 1 554 291 B1**
(45) Date de publication et mention de la délivrance du brevet: **11.10.2006**
(21) Numéro de dépôt: 03750829.8
(22) Date de dépôt: 21.07.2003
(51) Int. Cl.: C07F 7/14, C07F 7/20, C07F 15/00

(54) **PROCEDE DE PREPARATION D HALOGENOALKYLDIALKYLCHLOROSILANE**
VERFAHREN ZUR HERSTELLUNG VON HALOGENALKYLDIALKYLCHLORSILANE
METHOD OF PREPARING HALOGENOALKYLDIALKYLCHLOROSILANE

(30) Priorité: 09.08.2002 FR 0210146; 13.01.2003 FR 0300284
(43) Date de publication de la demande: 20.07.2005
(73) Titulaire: RHODIA CHIMIE, 92512 Boulogne-Billancourt (FR)
(72) Inventeur: GUENNOUNI, Nathalie, La Clairière, F-69540 Irigny (FR); RAMDANI, Kamel, F-69008 Lyon (FR)
(74) Mandataire: Delenne, Marc
(86) Numéro de dépôt international: PCT/FR2003/002301
(87) Numéro de publication internationale: WO 2004/016628

(56) Documents cités:
- EP-A- 1 156 052

## Description

La présente invention concerne un procédé de préparation d'halogenoalkyldialkylchlorosilane.

Plus particulièrement, la présente invention concerne un procédé de préparation de 3-chloropropyldiméthylchlorosilane, par hydrosilylation du diméthylhydrogénochlorosilane au moyen de chlorure d'allyle et d'un catalyseur à base d'un métal de la mine du platine et récupération dudit métal.

Dans ce type de réaction, les quantités de métal de la mine de platine engagées sont souvent élevées dans le but d'obtenir un rendement satisfaisant. Cette quantité de catalyseur métal est généralement supérieure a 30 p.p.m. calculées par rapport au poids total du mélange réactionnel. Pour que le procédé reste économiquement intéressant, il est souhaitable de pouvoir récupérer le métal de la mine du platine pour pouvoir le réutiliser comme catalyseur.

La présente invention propose un procédé de préparation d'un halogenoalkyldialkylchlorosilane du type ci-dessus, comportant une étape de récupération du métal catalytique.

La présente invention concerne en effet un procédé de préparation d'un halogenoalkyldialkylchlorosilane de formule (I) :

Hal-------(R²R³)Si---(CH₂)ₛ----Hal

par réaction d'hydrosilylation d'un milieu réactionnel comportant un silane de formule (II) :

Hal―(R²R³)Si-H

et un halogénure d'alcène de formule (III) :

CH₂=CH (̵CH₂)s₋₂ Hal

en présence d'une quantité catalytiquement efficace d'un catalyseur d'hydrosilylation à base d'un métal de la mine du platine, formules dans lesquelles :
- le symbole Hal représente un atome d'halogène choisi parmi les atomes de chlore, brome et iode, l'atome de chlore étant préféré,
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,
ledit procédé étant caractérisé en ce que, en fin de réaction d'hydrogénosilylation, on procède aux récupérations du produit formé de formule (I) et du métal catalytique de la mine du platine, ledit métal se trouvant sous sa forme originale de catalyseur ou sous une forme transformée, la récupération dudit métal catalytique se faisant dans les conditions a), b) et c) suivantes :
a) la récupération du métal catalytique est effectuée :
   1.soit directement sur le milieu réactionnel en fin de réaction,
   2.soit sur le culot liquide de distillation comportant les sous-produits et le métal de la mine du platine ou ses dérivés, culot tel qu'il est obtenu après distillation du milieu réactionnel pour en séparer le produit de formule (I),
b) la récupération du métal catalytique est effectuée par mise en contact du milieu réactionnel ou du culot de distillation, avec une quantité efficace d'une substance solide adsorbant le métal de la mine du platine, et
c) on réalise la séparation de l'adsorbant du métal de la mine du platine en vue de récupérer ledit métal.

Le métal de la mine du platine est choisi parmi le platine, l'iridium, le palladium, le rhodium, le ruthénium et l'osmium, le métal préféré étant l'iridium. Dans le cadre de cette disposition préférée, des catalyseurs à base d'Ir qui conviennent sont en particulier :
[IrCl(CO)(PPh₃)₂]
[Ir(CO)H(PPh₃)₃]
[Ir(C₈H₁₂)(C₅H₅N)P(C₆H₁₁)₃]PF₆
[IrCl₃],nH₂O
H₂[IrCl₆],nH₂O
(NH₄)₂IrCl₆
Na₂IrCl6
K₂IrCl₆
KIr(NO)Cl₅
[Ir(C₈H₁₂)₂]⁺BF₄⁻
[IrCl(CO)₃]ₙ
H₂IrCl₆
Ir₄(CO)₁₂
Ir(CO)₂(CH₃COCHCOCH₃)
Ir(CH₃COCHCOCH₃)
IrBr₃
IrCl₃
IrCl₄
IrO₂
(C₆H₇)(C₈H₁₂)Ir.

Dans le cadre de la disposition encore plus préférée mentionnée ci-avant, d'autres catalyseurs à base d'Ir qui conviennent encore mieux sont pris dans le groupe des complexes de l'iridium de formule :

[Ir(R⁴)Hal]₂ (XI)

où :
- le symbole R⁴ représente un ligand hydrocarboné insaturé comportant au moins une double liaison carbone=carbone et/ou au moins une triple liaison C≡C, ces liaisons insaturées pouvant être conjuguées ou non conjuguées, ledit ligant : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes comme par exemple un atome d'oxygène et/ou un atome de silicium ;
- le symbole Hal est tel que défini supra.

Comme exemple de complexes de l'iridium de formule (XII) qui conviennent encore mieux, on citera ceux dans la formule desquels :
- le symbole R⁴ est choisi parmi le butadiène-1,3, l'hexadiène-1,3, le cyclohexadiène-1,3, le cyclooctadiène-1,3, le cyclooctadiène-1,5, le cyclododécatriène-1,5,9 et le norbornadiène, et les composés suivants de formule : 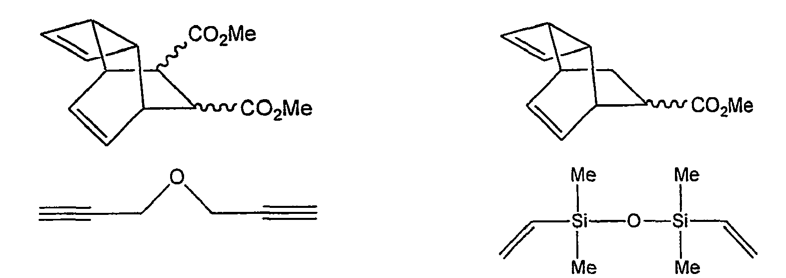 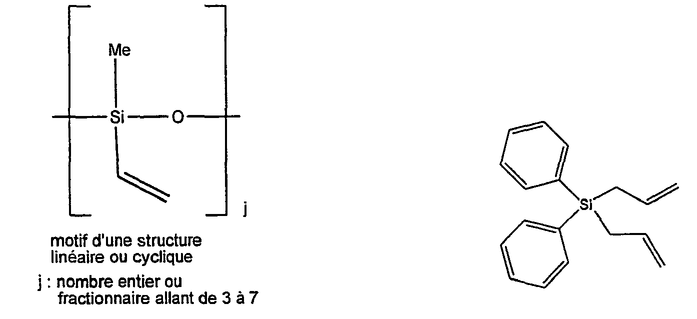 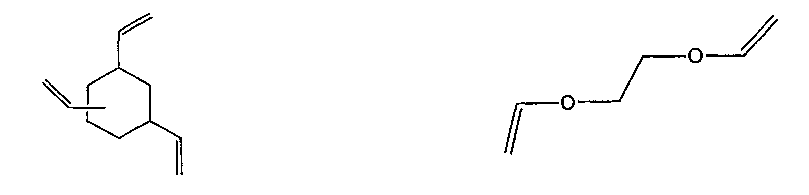
- le symbole Hal représente un atome de chlore.

A titre d'exemples spécifiques de complexes de l'iridium qui conviennent encore mieux, on citera les catalyseurs suivants :
di-µ-chlorobis(divinyltétraméthyldisiloxane)diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbornadiene)diiridium,
di-µ-bromobis(η-2,5-norbornadiene)diiridium,
di-µ-iodobis(η-2,5-norbomadiene)diiridium.

Sans sortir du cadre de la présente invention, on peut utiliser, à côté du catalyseur à base d'un métal de la mine du platine, au moins un promoteur de réaction d'hydrosilylation.

A titre du (ou des) promoteur(s) optionnel(s) on peut citer : un composé, qui peut présenté par exemple la forme d'un ligand ou d'un composé ionique, pris en particulier dans le groupe formé par : un péroxyde organique ; un acide carboxylique ; un sel d'acide carboxylique ; une phosphine tertiaire ; un phosphite comme par exemple un phosphite éventuellement mixte d'alkyle et/ou d'aryle ; une amine ; un amide ; une cétone linéaire ou cyclique ; une cétone linéaire ou cyclique; un trialkylhydrogénosilane ; le benzothriazole ; la phénothiazine ; un composé de type métal trivalent-(C₆H₅)₃ où métal = As, Sb ou P ; un mélange d'amine ou de cyclohexanone avec un composé organosilicique comprenant un ou plusieurs groupe(s) ≡Si-H ; les composés CH₂=CH-CH₂-OH ou CH₂=CH-CH₂₋OCOCH₃ ; une lactone ; un mélange de cyclohexanone avec la triphénylphosphine ; un composé ionique comme par exemple un nitrate ou un borate de métal alcalin ou d'imidazolinium, un halogénure de phosphonium, un halogénure d'ammonium quaternaire, un halogénure d'étain II.

Le (ou les) promoteur(s) optionnel(s), quand on en utilise un (ou plusieurs), est (sont) introduit(s) généralement en début de réaction, soit dans l'état ou il(s) se trouve(nt) normalement, soit sous forme d'un pré-mélange à base de : promoteur(s) + catalyseur(s) ; ou promoteur(s) + tout ou partie du diorganohalogénosilane de formule (II) ; ou promoteur(s) + tout ou partie de l'halogénure d'alcène de formule (III).

Le catalyseur peut être utilisé, et il s'agit là d'une autre disposition préférentielle, en milieu liquide homogène, comme cela est décrit dans JP-B-2.938.731 et EP-A-1 156 052. Dans ce cadre, la réaction peut être conduite soit de façon continue, soit de façon semi-continue, soit de façon discontinue. En fin d'opération on procède, comme indiqué ci-avant, aux récupérations du produit formé de formule (I) et du métal catalytique de la mine du platine.

Selon la présente invention, le mélange réactionnel ou le culot liquide de distillation est mis en contact avec une quantité adsorbante efficace d'un agent adsorbant solide.

L'adsorbant solide se présente généralement sous forme de poudre, d'extrudé, de granulé ou greffé sur un support comme la cellulose par exemple.

Comme adsorbant solide on recommande plus spécialement d'utiliser le noir de carbone; les charbons actifs; les tamis moléculaires qui sont le plus souvent des zéolites synthétiques, des silicalites ou des aluminosilicates métallique; des silices ; des alumines activées ; des charges adsorbantes à base de diatomite et de perlite ; des argiles activées et broyées à base de bentonite et d'attapulgite ; des résines échangeuses d'ions ; ou des résines de type amberlites ou amberlystes.

L'adsorption peut être mise en oeuvre avantageusement en discontinu (i.e. en batch) par mise en contact d'un solide adsorbant du type poudre ou granulés avec le mélange réactionnel ou le culot de distillation. L'adsorption peut être mise en oeuvre avantageusement encore en continu par mise en contact d'un solide adsorbant contenu dans une colonne ou un lit fixe ou une cartouche avec le mélange réactionnel ou le culot de distillation. Le temps de contact peut varier de 5 minutes à 10 heures, de préférence entre 30 minutes et 7 heures en batch. La température peut varier de 5 à 150°C, de préférence de 10 à 30 °C.

La quantité d'adsorbant utilisée pour les charbons actifs, les tamis moléculaires, les silices, les alumines ainsi que les adjuvants minéraux est fortement liée d'une part à la capacité d'adsorption spécifique relative à chacun des adsorbants qu'il est possible d'utiliser dans le cadre de l'invention et d'autre part aux paramètres de mise en oeuvre telle que la température et la présence ou non d'un solvant.

La capacité d'adsorption (q) est exprimée en nombre de moles de métal de la mine du platine adsorbé par kilogramme d'adsorbant utilisé. Cette quantité q est généralement comprise entre 0,01 et 5. Dans le cas où l'adsorbant est une résine échangeuse d'ions, la résine se caractérise par une valeur de capacité d'échange qui est spécifique pour chaque grade de résine et qui est relative à la fonctionnalité portée par cette résine. On exprime cette capacité d'échange en général en meq/g pour un produit sec ou en meq/ml sur produit humide. On utilisera ces résines de préférences de telle manière que le rapport molaire entre la fonction portée par la résine et le métal de la mine du platine présent dans la solution à traiter soit compris entre 1 et 30, de préférence entre 1 et 15 et, plus particulièrement entre 1 et 5.

L'étape d'adsorption peut être mise en oeuvre à pression atmosphérique ou sous pression réduite, et, éventuellement en présence d'un solvant inerte vis à vis de l'halogénure d'hydrogène HHal présent à l'état de trace dans le milieu (dans le cas où le culot n'est pas hydrolysé comme indiqué ci-après). On recommande d'utiliser les alcanes (de préférence en C₆ et C₇), les solvant aromatiques (toluène, xylène ou chlorobenzène), et les cétones.

La quantité d'halogénure d'alcène de formule (III) utilisée est de préférence de 1 à 2 moles pour 1 mole de silane de formule (II). Quant à la quantité de catalyseur(s) (i), exprimée en poids de métal de la mine du platine, elle se situe dans l'intervalle allant de 1 à 10 000 p.p.m., de préférence allant de 10 à 2000 p.p.m. et plus préférentiellement allant de 20 à 1000 p.p.m. basées sur le poids de silane de formule (II).

L'adsorbant solide, à la surface duquel le métal catalytique est adsorbé, est séparé du milieu réactionnel ou du culot de distillation par tout moyen convenable de séparation liquide/solide tel que filtration, centrifugation ou sédimentation. Le métal est ensuite séparé de l'adsorbant par tout moyen physico-chimique compatible avec ledit adsorbant.

Dans le cas où l'étape d'adsorption est conduite sur le culot de distillation, le procédé, selon une variante préférée de mise en oeuvre, comporte en outre - après l'étape de distillation du milieu réactionnel - une étape supplémentaire de mise en contact du culot liquide avec de l'eau en présence éventuellement d'un solvant organique inerte vis-à-vis de HHal formé, en vue d'obtenir une phase aqueuse et une phase organique et d'hydrolyser ledit culot, ce qui permet de réaliser ainsi l'objectif d'inerter le culot réactif.

La réaction mise en oeuvre consiste à transformer l'ensemble des fonctions Si-CI présentent dans le culot de distillation en fonction silanol Si-OH et siloxane Si-O-Si en procédant par la mise en contact d'une solution aqueuse avec le culot de distillation suivant les réactions chimiques :

Si-Hal + H₂O → Si-OH + HHal

Si-OH + Si-Hal → Si-O-Si + HHal et Si-OH + Si-OH → Si-O-Si + H₂O

L'hydrolyse peut se faire en milieu acide ou basique. Si la réaction se fait en milieu acide, la solution aqueuse utilisée comme réactif peut être pré-acidifiée (à l'HHal par exemple) ou être constituée uniquement d'eau déminéralisée. Le pH de la solution évolue alors au cours de la réaction vers des valeurs inférieures à 7. Dans ce cas, il est possible de réaliser une neutralisation de la phase aqueuse en fin d'hydrolyse en ajoutant une base. L'hydrolyse se fait de préférence en milieu basique de telle sorte que tout l'HHal soit éliminé. Il est recommandé d'effectuer la coulée du culot sur un pied de solution aqueuse. L'hydrolyse peut se faire à des températures comprises de -15°C à 80°C. La réaction étant exothermique, on préfère réaliser la coulée du culot à des températures modérées comprises entre -10 et 30°C. Un contrôle de la température peut s'avérer nécessaire. En fin de coulée du culot, le milieu obtenu est biphasique constitué d'une phase organique et d'une phase aqueuse.

De préférence l'eau est ajoutée en quantité suffisante pour que l'HHal formé ne soit pas à saturation dans la phase aqueuse.

Préférentiellement le produit de formule (I) est le 3-chloropropyldiméthylchlorosilane, le produit de formule (II) est le diméthylhydrogénochlorosilane et le produit de formule (III) est le chlorure d'allyle . Dans ce cas l'halogénure d'hydrogène formé est HCl.

Les exemples suivants illustrent l'invention sans en limiter la portée.

Dans les exemples ci-dessous on réalise tout d'abord une réaction d'hydrosilylation du diméthylhydrogénochlorosilane sur du chlorure d'allyle en présence de 500 p.p.m. de di-µ-chlorobis(η-1,5-cyclooctadiene)diiridium par rapport au poids de diméthylhydrogénochlorosilane. Dans un réacteur muni d'un agitateur , d'un condenseur à reflux et d'un thermomètre. Le diméthylhydrogénochlorosilane est ajouté goutte à goutte au milieu réactionnel pendant 7 heures à une température de 38°C. Le milieu final ainsi obtenu constitue le milieu réactionnel qui est traité dans certains des exemples suivants. Le 3-chloropropyldiméthylchlorosilane est séparé du milieu réactionnel par distillation et il reste un culot liquide de distillation contenant le catalyseur ; c'est ce culot de distillation qui est traité dans certains des exemples suivants.

### Exemple 1 : récupération de l'iridium sur un culot de distillation ni dilué ni hydrolysé par 2% en poids de noir de carbone:

Dans un tétracol d'un litre équipé d'une agitation mécanique et respirant sous atmosphère d'argon, sont introduits 208.85 g de culot de distillation contenant 1.2 % en poids d'iridium. Le milieu réactionnel est agité et chauffé à 60°C.

4.235 g de noir de carbone 2S commercialisé par la société CECA sont alors ajoutés et les conditions de température sont maintenues 1 heure. Le milieu est alors filtré sous pression d'argon sur filtre inox (0.5 µm). L'huile correspondant au filtrat ainsi que le gâteau sont récupérés et analysés en analyse élémentaire. Les résultats obtenu sont rassemblés dans le tableau 1 ci-après :

**TABLEAU 1**

| Exemples | | Ir** | C | H | Cl | Si | Σ |
|---|---|---|---|---|---|---|---|
| 1 | | | | | *33.1* | | |
| | Huile avant traitement | *1.2* | *39.3* | *7.8* | *(32.3)* * | *17.6* | *99.8* |
| 1 | Huile traitement à 2% massique de noir de | | | | 32.2 | | |
| | carbone et après filtration | 0.83 | 40.4 | 8.2 | (30.6) * | 18.2 | 99.8 |
| 1 | Gâteau après filtration | | | | 15.42 | | |
| | issu du traitement à 2% | 8.0 | 56.4 | 4.9 | *(14.1)* * | 9.2 | 93.9 |

| | | | | | | | |
|---|---|---|---|---|---|---|---|
| ** *Les valeurs indiquées représentent la concentration massique en Ir* dans le *milieu considéré* *Rq : valeurs arrondies au 10*^{*ème*} *du fait de l'instabilité des composés* ** deuxième mesure* | | | | | | | |

L'efficacité est de 30.8%.

La capacité du noir pour cette concentration de 3.07 mole d'Ir / Kg de noir 2S.

### Exemples 2 : récupération de l'iridium sur un culot de distillation ni dilué ni hydrolysé par 5% en poids de noir de carbone :

Dans un tétracol d'un litre équipé d'une agitation mécanique et respirant sous atmosphère d'argon, sont introduits 194.2 g de culot de distillation identique à celui utilisé aux exemples 1 à 3 et contenant 1.2% en poids d'iridium. Le milieu réactionnel est agité et chauffé à 60°C.

9.75 g de noir de carbone 2S (CECA) sont alors introduits et les conditions de température sont maintenues 1 heure. Le milieu est alors filtré sous pression d'argon sur filtre inox. L'huile correspondant au filtrat ainsi que le gâteau sont récupérés et analysés en analyse élémentaire.

Les résultats obtenu sont rassemblés dans le tableau 2 ci-après :

**TABLEAU 2**

| Exemples | | Ir (**) | C | H | Cl | Si | Σ |
|---|---|---|---|---|---|---|---|
| 2 | | | | | 33.1 | | |
| | Huile avant traitement | *1.2* | *39.3* | *7.8* | *(32.3)* * | *17.6* | *99.8* |
| 2 | Huile traitement à 5% massique de noir de | | | | 31.8 | | |
| | carbone et après filtration | 0.63 | 38.7 | 7.8 | (30.8) * | 19.6 | 98.5 |
| 2 | Gâteau après filtration | | | | 19.0 | | |
| | issu du traitement à 5% | 6.2 | 55.6 | 4.8 | *(18.6)* * | 9.3 | 94.9 |

| | | | | | | | |
|---|---|---|---|---|---|---|---|
| *Rq : valeurs arrondies au 10*^{*ème*} *du fait de l'instabilité des composés* ** deuxième mesure* | | | | | | | |

L'efficacité est de 47.5% .

La capacité du noir pour cette concentration de 1.243 mole d'Ir / Kg de noir 2S.

### Exemple 3 : récupération de l'iridium par du noir de carbone sur un culot de distillation dilué et hydrolysé :

### Le culot de distillation utilisé est préalablement hydrolysé en milieu acide :

Dans un tricol d'un litre muni d'une agitation mécanique, d'une sonde de température et d'un septum, le culot de distillation identique à celui utilisé dans les exemples 1 à 6, (50.12 g) est introduit à un débit de 2 ml/min via une pompe péristaltique sur un pied d'eau déminéralisée (500 7 g) très fortement agité (400tr/min). La température du milieu augmente passant de 21 °C à 25,3°C en fin de coulée. L'agitation est maintenue 1 h30. L'ensemble du milieu est transvasé dans une ampoule à décanter et la phase organique est récupérée après ajout de 2x250 ml de toluène (phase A).

Une fraction de cette solution est dévolatilisée (50°C/70-mbars). Une huile fluide d'une couleur noire intense est récupérée et analysée:
% Ir : 0.55%
RMN ²⁹Si : absence de fonction de type SiCl
ES (extrait sec): 6.61 %

### Traitement à 2% de noir de carbone 2S :

Une fraction de la phase toluènique (phase A) est récupérée (191.88 g) et introduite dans un monocol. 3.84 g de noir de carbone 2S sont introduits et le ballon est alors placé sur un rotavapor à 60°C et à pression atmosphérique. Le noir de carbone est alors récupéré par filtration sous pression sur filtre inox (0.5µm). Le gâteau est lavé à l'aide de 150 ml de toluène puis séché partiellement par passage d'azote sur le gâteau.

La phase organique est dévolatilisée. L'huile obtenue est orangée et contient 0.18% d'iridium. Une masse de 5.95 g de gâteau est récupéré. Il contient 1.27% d'iridium.

L'efficacité est de 67.3%.

La capacité du noir pour cette concentration de 94.59 10⁻³ mole d'Ir / Kg de noir 2S.

### Double traitement à 5% de noir de carbone 2S :

Une fraction de la phase toluènique (phase A) est récupérée (157.65 g) et introduite dans un monocol. 7.88 g de noir de carbone 2S sont introduits et le ballon est alors placé sur un rotavapor à 60°C et à pression atmosphérique. Le noir est alors récupéré par filtration sous pression sur filtre inox (0.5µm). Le gâteau est lavé à l'aide de 150 ml de toluène puis partiellement séché par passage d'azote sur le gâteau.

La phase organique est conservée. 10.27 g de gâteau sont récupérés. Il contient 0.64% d'iridium.

Un second traitement est réalisé sur la phase organique. 7.88 g de noir de carbone 2S sont introduits dans le monocol contenant la phase organique et le milieu est chauffé au rotavapor pendant 1 heure à 60°C. Le milieu est alors filtré. La phase organique récupéré après filtration (conditions identiques aux précédentes) est dévolatilisée. Une huile fluide très légèrement jaunâtre et limpide est récupérée. Elle contient 355 p.p.m. d'iridium.

Le noir de carbone récupéré est partiellement séché. Il contient 865 p.p.m. d'iridium.

L'efficacité est de 93.5%.

La capacité du noir pour cette concentration de 1.892 10⁻² mole d'Ir / Kg de noir 2S.

### Exemple 4 : récupération de l'iridium par du noir de carbone 2S (CECA) sur un culot de distillation dilué et hydrolysé :

L'hydrolyse est réalisé en milieu basique.

La matière première utilisée est le culot de distillation identique à celui des exemples précédents mais sous forme d'une solution contenant entre 0.71 - 0.72% et 0.78 - 0.82% d'iridium et titrée en HCl (relargable) à 0.104 g HCl /g de solution.

L'hydrolyse se fait par coulée de cette solution sur un pied de soude à température ambiante de telle sorte que le rapport molaire : n(HCl)/n(NaOH) = 1

Sur un pied d'eau déminéralisée (300.94 g) et de soude 1 N (87.24 g) est coulé sous forte agitation (470 T /min) et sur 14 minutes 31.3 g de solution toluénique à température ambiante. La réaction étant exothermique la température du milieu est régulée par bain de glace. Un milieu biphasique est obtenu. La pH phase aqueuse est compris entre 6 et 7 (papier pH). 41.99 g de noir de carbone 2S sont alors introduits dans le milieu. Le milieu est agité par agitation mécanique à TA et pendant 2h (pas d 'exothermie observée).

Le contenu du ballon est transvasé dans un filtre pression (filtration sur carton) ainsi qu'une fraction de toluène (500 ml) ayant servi à rincer le contenu du ballon. Le noir est ensuite séché en étuve (55°C, sous 3 mbar) pendant 15 heures.

Les phases sont séparées et analysées.

Le dosage en iridium conduit aux valeurs suivantes rassemblées dans le tableau 3 ci-après :

**TABLEAU 3**

| | % Ir | Répartition de l'iridium / masses |
|---|---|---|
| Phase aqueuse | 29 - 29 p.p.m. | ≈ 5 - 5.5 % (1) |
| Huile silicone | 560 p.p.m. | ≈5-5.5%(1) |
| Toluène | < 10 p.p.m. | |
| Gâteau | 0.44 - 0.45 % | 80 -89 % (2) |

| | | |
|---|---|---|
| *(1) : imprécision due au bilan matière < 100%* *(2) : écart dû à la précision du dosage de la phase toluénique de départ.* | | |

L'efficacité est de 84.5% en moyenne.

La capacité du noir pour cette concentration de 2.94 10⁻² mole d'Ir / Kg de noir 2S.

Le pourcentage en poids de silicium et chlore dans le noir de carbone sont les suivants

| | |
|---|---|
| %Cl : | 0.64 - 0.65 |
| %Si : | 0.2 - 0.3 |

### Exemples 5 et 6 : récupération de l'iridium par adsorption, sur le mélange réactionnel (exemple 5) et sur le culot de distillation (exemple 6) :

Dans un réacteur parfaitement agité de 100cc, on charge environ soit 60 g de milieu réactionnel, soit 60 g de culot de distillation. On met en marche l'agitation et la température est maintenu à 20°C. On ajoute suivant les essais 1g, 5g ou 10g de noir de carbone 3S en poudre ou de résines sulfoniques. L'agitation est maintenu pendant 3 heures.

Ensuite, l'agitation est arrêté et on filtre le noir sur filtre buchner : on récupère une phase liquide (filtrat) et une phase solide (noir et iridium adsorbé). Les deux phases sont analysés pour déterminer la quantité d'iridium dans chaque phase.

Le tableau suivant donne les résultats :

| | masse (g) | [lr] ppm | masse Ir mg | résine g | noir g | filtrat: Ir mg | % récupéré |
|---|---|---|---|---|---|---|---|
| MR | 63.23 | 358 | 22.64 | | 1 | 3.27 | 85 |
| MR | 57.70 | 358 | 20.66 | 1 | | 17.56 | 15 |
| Culot | 60.45 | 9400 | 568.23 | | 1 | 352.00 | 38 |
| Culot | 64.56 | 9400 | 606.86 | 1 | | 530.00 | 13 |
| | | | | | | | |
| MR | 69.00 | 358 | 24.70 | | 5 | 0.561 | 98 |
| Culot | 69.00 | 9400 | 648.6 | | 5 | 111.58 | 83 |
| Culot | 62.80 | 10800 | 677.0 | | 10 | 15.75 | 97 |

| | | | | | | | |
|---|---|---|---|---|---|---|---|
| MR : milieu réactionnel ; charge initiale en iridium = 358 ppm massique. Culot : culot de distillation ; charge initiale en iridium = 9400 à 10800 ppm massique. % récupéré : pourcentage d'iridium récupéré sur le solide. | | | | | | | |

### Exemple 7 : récupération de l'iridium par de la poudre de noir de carbone 3S (CECA) sur le culot de distillation:

Dans un réacteur parfaitement agité de 500cc, on charge 300 g de culot de distillation, avec une teneur en iridium de 9400 ppm massique. On met en marche l'agitation et la température est maintenu à 20°C. On ajoute 23g de noir de carbone 3S en poudre. L'agitation est maintenu pendant 3 heures.

Ensuite, l'agitation est arrêté et on filtre le noir sur filtre buchner (filtration sous vide): on récupère une phase liquide (filtrat) et une phase solide (noir et iridium adsorbé). Les deux phases sont analysées pour déterminer la quantité d'iridium dans chaque phase :
- filtrat : concentration en iridium = 2500 ppm ;
- iridium récupéré sur le noir : 80% de la charge initiale soit 7520 ppm.

Le filtrat récupéré (265 g) est réintroduit dans le réacteur. On ajoute 20 g de noir et on agite pendant 3 heures. On filtre ensuite le solide sur filtre buchner ;
- filtrat : concentration en iridium = 560 ppm ;
- iridium récupéré sur le noir total : 97.3% de la charge initiale soit 9150 ppm.

Les résultats obtenus sont donnés dans le schéma ci-après :

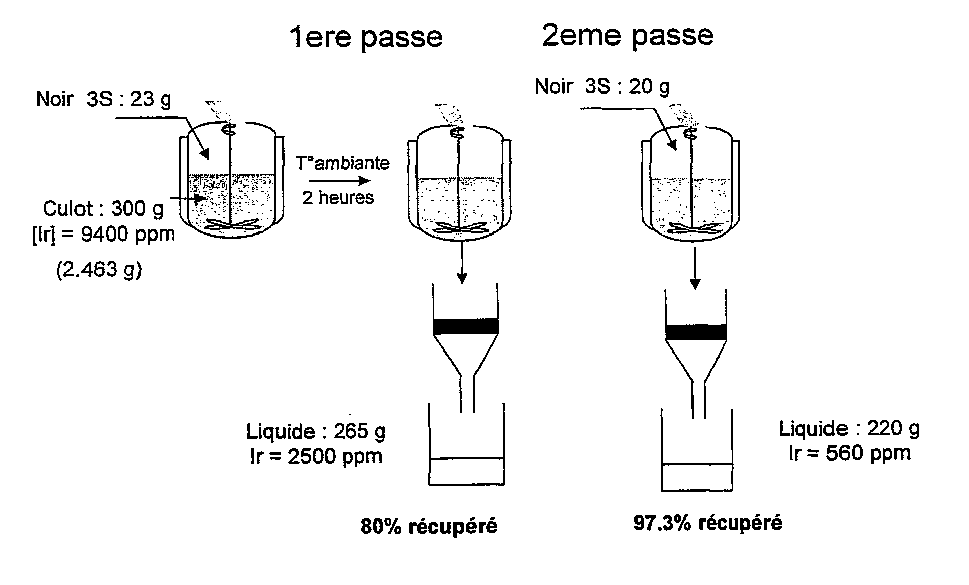

### Exemple 8 : récupération en continu de l'iridium par de la poudre de noir de carbone 3S (CECA) sur le culot de distillation:

On utilise un lit fixe de noir de carbone en granulés. Le diamètre du lit est de 1 cm et la longueur de 50 cm. La quantité de noir chargé dans le lit est de 20 g. Le débit horaire de culot de distillation (avec une concentration en iridium de 9400 ppm massique) injecté correspond à 5 fois le volume du lit de noir de carbone, soit un débit de 0.2 litres/h.

Dans ces conditions, la vitesse en fût vide est de 2.5 m/h et le temps de perçage de 10 heures. La quantité de culot traité est de 2 litres, soit 19 grammes d'iridium engagé. La quantité d'iridium récupéré dans le lit fixe est de 18,7 grammes (98.5% récupéré).

La capacité du noir en procédé continu est donc de 5 moles /kg.

## Revendications

1. Procédé de préparation d'un halogénoalkyldialkylchlorosilane de formule (I) :
Hal------(R²R³)Si---(CH₂)ₛ---Hal
par réaction d'hydrosilylation d'un milieu réactionnel comportant un silane de formule (II) :
Hal---(R²R³)Si-H
et un halogénure d'alcène de formule (III) :
CH₂CH-(CH₂)ₛ₋₂Hal
en présence d'une quantité catalytiquement efficace d'un catalyseur d'hydrosilylation à base d'un métal de la mine du platine, formules dans lesquelles :
- le symbole Hal représente un atome d'halogène choisi parmi les atomes de chlore, brome et iode,
- les symboles R² et R³, identiques ou différents, représentent chacun un groupe hydrocarboné monovalent choisi parmi un radical alkyle, linéaire ou ramifié, ayant de 1 à 6 atomes de carbone et un radical phényle, et
- s représente un nombre entier compris entre 2 et 10 inclus,
ledit procédé étant **caractérisé en ce que**, en fin de réaction d'hydrogénosilylation, on procède aux récupérations du produit formé de formule (I) et du métal catalytique de la mine du platine, ledit métal se trouvant sous sa forme originale de catalyseur ou sous une forme transformée, la récupération dudit métal catalytique se faisant dans les conditions a), b) et c) suivantes :
a) la récupération du métal catalytique est effectuée :
1.soit directement sur le milieu réactionnel en fin de réaction,
2.soit sur le culot liquide de distillation comportant les sous-produits et le métal de la mine du platine ou ses dérivés, culot tel qu'il est obtenu après distillation du milieu réactionnel pour en séparer le produit de formule (I),
b) la récupération du métal catalytique est effectuée par mise en contact du milieu réactionnel ou du culot de distillation, avec une quantité efficace d'une substance solide adsorbant le métal de la mine du platine, et
c) on réalise la séparation de l'adsorbant du métal de la mine du platine en vue de récupérer ledit métal.

2. Procédé selon la revendication 1, **caractérisé en ce** le métal de la mine du platine est choisi parmi le platine l'iridium, le palladium, le ruthénium et l'osmium.

3. Procédé selon la revendication 1 ou 2, **caractérisé en ce que** s est égal à trois et le métal de la mine du platine est l'iridium.

4. Procédé selon la revendication 3, **caractérisé en ce que** le catalyseur répond à la formule :
[Ir(R⁴)Hal]₂ (IV)
où :
- le symbole R⁴ représente un ligand hydrocarboné insaturé comportant au moins une double liaison carbone=carbone et/ou au moins une triple liaison C≡C, ces liaisons insaturées pouvant être conjuguées ou non conjuguées, ledit ligant : étant linéaire ou cyclique (mono ou polycyclique), ayant de 4 à 30 atomes de carbone, ayant de 1 à 8 insaturations éthyléniques et/ou acétyléniques et comportant éventuellement un ou plusieurs hétéroatomes.

5. Procédé selon la revendication 4, **caractérisé en ce que** le catalyseur est choisi parmi :
di-µ-chlorobis(divinyltétraméthyidisiloxane)diiridium,
di-µ-chlorobis(η-1,5-hexadiene)diiridium,
di-µ-bromobis(η-1,5-hexadiene)diiridium,
di-µ-iodobis(η-1,5-hexadiene)diiridium,
di-µ-chlorobis(η-1,5-cyclooctadiene)diiridium,
di-µ-bromobis(η-1,5-cyclooctadiene)diiridium,
di-µ-iodobis(η-1,5-cyclooctadiene)diiridium,
di-µ-chlorobis(η-2,5-norbomadiene)diiridium,
di-µ-bromobis(η-2,5-norbomadiene)diiridium, ou
di-µ-iodobis(η-2,5-norbomadiene)diiridium.

6. Procédé selon les revendications 4 ou 5, **caractérisé en ce que** la teneur en catalyseur calculé en poids de catalyseur métal est supérieur a 30 p.p.m. calculées par rapport au poids total du mélange réactionnel formé par les produits de formule (I), (II) et (III).

7. Procédé selon l'une quelconque des revendications 1 à 6, **caractérisé en ce que**, dans le cas où l'étape d'adsorption est conduite sur le culot de distillation, le procédé comporte en outre - après l'étape de distillation du milieu réactionnel - une étape supplémentaire de mise en contact du culot liquide avec de l'eau en présence éventuellement d'un solvant organique inerte vis-à-vis de HHal formé, en vue d'obtenir une phase aqueuse et une phase organique et d'hydrolyser ledit culot.

8. Procédé selon l'une quelconque des revendications précédentes, **caractérisé en ce que** l'adsorbant est du noir de carbone.

9. Procédé selon l'une quelconque des revendications 1 à 7, **caractérisé en ce que** l'adsorbant est un tamis moléculaire, une silice, une alumine activée, ou une résine échangeuse d'ions.

10. Procédé selon la revendication 7 ou 8, **caractérisé en ce que** l'eau est ajoutée en quantité suffisante pour que l'HHal formé ne soit pas à saturation dans la phase aqueuse.

11. Procédé selon l'une quelconque des revendications précédentes, **caractérisé en ce que** le produit de formule (I) est le 3-chloropropyldiméthylchlorosilane, le produit de formule (II) est le diméthylhydrogénochlorosilane et le produit de formule (III) est le chlorure d'allyle.

12. Procédé selon l'une quelconque des revendications précédentes, **caractérisé en ce que** l'adsorption est mise en oeuvre en discontinu (procédé batch), par mise en contact du solide adsorbant de type poudre ou granulés avec le milieu réactionnel ou le culot de distillation.

13. Procédé selon l'une quelconque des revendications 1 à 11, **caractérisé en ce que** l'adsorption est mise en oeuvre en continu par mise en contact d'un solide adsorbant contenu dans une colonne ou un lit fixe ou une cartouche avec le mélange réactionnel ou le culot de distillation.

## Claims

1. A process for the preparation of a haloalkyldialkylchlorosilane of formula (I):
Hal- (R²R³) Si- (CH₂)ₛ-Hal
by the hydrosilylation reaction of a reaction medium comprising a silane of formula (II):
Hal-(R²R³)Si-H
and an alkenyl halide of formula (III):
CH₂=CH-(CH₂)ₛ₋₂Hal
in the presence of a catalytically effective amount of a hydrosilylation catalyst based on a platinum ore metal,
in which formulae:
- the symbol Hal represents a halogen atom chosen from chlorine, bromine and iodine atoms,
- the symbols R² and R³, which are identical or different, each represent a monovalent hydrocarbon group chosen from a linear or branched alkyl radical having from 1 to 6 carbon atoms and a phenyl radical, and
- s represents an integer between 2 and 10 inclusive, said process being **characterized in that**, at the end of the hydrosilylation reaction, the product of formula (I) formed is recovered and the catalytic platinum ore metal is recovered, said metal being found in its original form of catalyst or in a converted form, the recovery of said catalytic metal taking place under the following conditions a), b) and c):
a) the recovery of the catalytic metal is carried out:
1. either directly on the reaction medium at the end of the reaction,
2. or on the liquid distillation residue, comprising the byproducts and the platinum ore metal or its derivatives, as is obtained after distillation of the reaction medium in order to separate therefrom the product of formula (I),
b) the catalytic metal is recovered by bringing the reaction medium or the distillation residue into contact with an effective amount of a solid substance which adsorbs the platinum ore metal, and
c) the adsorbent is separated from the platinum ore metal for the purpose of recovering said metal.

2. The process as claimed in claim 1, **characterized in that** the platinum ore metal is chosen from platinum, iridium, palladium, ruthenium and osmium.

3. The process as claimed in claim 1 or 2, **characterized in that** s is equal to 3 and the platinum ore metal is iridium.

4. The process as claimed in claim 3, **characterized in that** the catalyst corresponds to the formula:
[Ir(R⁴)Hal]₂ (IV)
where:
- the symbol R⁴ represents an unsaturated hydrocarbon ligand comprising at least one C=C double bond and/or at least one C=C triple bond, it being possible for these unsaturated bonds to be conjugated or nonconjugated, said ligand being linear or cyclic (mono- or polycyclic), having from 4 to 30 carbon atoms, having from 1 to 8 ethylenic and/or acetylenic unsaturations and optionally comprising one or more heteroatoms.

5. The process as claimed in claim 4, **characterized in that** the catalyst is chosen from:
di-µ-chloro-bis(divinyltetramethyldisiloxane)diiridium,
di-µ-chloro-bis(η-1,5-hexadiene)diiridium,
di-µ-bromo-bis(η-1,5-hexadiene)diiridium,
di-µ-iodo-bis(η-1,5-hexadiene)diiridium,
di-µ-chloro-bis(η-1,5-cyclooctadiene)diiridium,
di-µ-bromo-bis(η-1,5-cyclooctadiene)diiridium,
di-µ-iodo-bis(η-1,5-cyclooctadiene)diiridium,
di-µ-chloro-bis(η-2,5-norbornadiene)diiridium,
di-µ-bromo-bis(η-2,5-norbornadiene)diiridium, or
di-µ-iodo-bis(η-2,5-norbornadiene)diiridium.

6. The process as claimed in claim 4 or 5, **characterized in that** the content of catalyst, calculated as weight of catalyst metal, is greater than 30 ppm, calculated with respect to the total weight of the reaction mixture formed by the products of formulae (I), (II) and (III).

7. The process as claimed in any one of claims 1 to 6, **characterized in that**, in the case where the adsorption stage is carried out on the distillation residue, the process additionally comprises, after the stage of distillation of the reaction medium, an additional stage in which the liquid residue is brought into contact with water optionally in the presence of an organic solvent which is inert with regard to HHal formed, for the purposes of obtaining an aqueous phase and an organic phase and of hydrolyzing said residue.

8. The process as claimed in any one of the preceding claims, **characterized in that** the adsorbent is carbon black.

9. The process as claimed in any one of claims 1 to 7, **characterized in that** the adsorbent is a molecular sieve, a silica, an activated alumina or an ionexchange resin.

10. The process as claimed in claim 7 or 8, **characterized in that** the water is added in an amount sufficient for the HHal formed not to be at saturation in the aqueous phase.

11. The process as claimed in any one of the preceding claims, **characterized in that** the product of formula (I) is 3-chloropropyldimethylchlorosilane, the product of formula (II) is dimethylhydrochlorosilane and the product of formula (III) is allyl chloride.

12. The process as claimed in any one of the preceding claims, **characterized in that** the adsorption is carried out batchwise by bringing the adsorbent solid of powder or granule type into contact with the reaction medium or the distillation residue.

13. The process as claimed in any one of claims 1 to 11, **characterized in that** the adsorption is carried out continuously by bringing an adsorbent solid present in a column or a fixed bed or a cartridge into contact with the reaction mixture or the distillation residue.

## Patentansprüche

1. Verfahren zur Herstellung eines Halogenalkyldialkylchlorsilans der Formel (I):
Hal - (R²R³)Si-(CH₂)ₛ-Hal
durch Hydrosilylierungsreaktion eines Reaktionsgemisches, das ein Silan der Formel (II):
Hal-(R²R³)Si-H
und ein Alkenhalogenid der Formel (III):
CH₂=CH-(CH₂)ₛ₋₂Hal
umfasst in Gegenwart einer katalytisch wirksamen Menge eines Hydrosilylierungskatalysators auf Grundlage eines Metalls der Platingruppe,
wobei in den Formeln:
- das Symbol Hal ein Halogenatom ausgewählt aus Chlor-, Brom- und Iodatomen darstellt,
- die Symbole R² und R³, gleich oder verschieden voneinander, jeweils einen monovalenten Kohlenwasserstoffrest ausgewählt aus einem linearen oder verzweigten Alkylradikal aus 1 bis 6 Kohlenstoffatomen und einem Phenylradikal darstellt, und
- s eine ganze Zahl zwischen 2 und 10 (inklusive) darstellt,
wobei das Verfahren **dadurch gekennzeichnet ist, dass** am Schluss der Hydrogensilylierungsreaktion eine Rückgewinnung des gebildeten Produkts der Formel (I) und des katalytischen Metalls der Platingruppe stattfindet, wobei sich dieses Metall in seiner ursprünglichen Form als Katalysator oder in einer veränderten Form befindet, und die Rückgewinnung des katalytischen Metalls unter folgenden Bedingungen a), b) und c) durchgeführt wird:
a) die Rückgewinnung des katalytischen Metalls erfolgt:
1. entweder direkt aus dem Reaktionsgemisch am Ende der Reaktion,
2. oder aus dem flüssigen Destillationsrückstand, der die Nebenprodukte und das Metall der Platingruppe oder seine Derivate umfasst, wobei der Rückstand nach der Destillation des Reaktionsgemisches zur Abtrennung des Produkts der Formel (I) erhalten wurde,
b) die Rückgewinnung des katalytischen Metalls erfolgt durch Inkontaktbringen des Reaktionsgemisches oder des Destillationsrückstands mit einer wirksamen Menge eines Feststoffs, der das Metall der Platingruppe adsorbiert, und
c) die Trennung des adsorbierenden Mittels vom Metall der Platingruppe wird durchgeführt mit dem Ziel, dieses Metall zurückzugewinnen.

2. Verfahren gemäß Anspruch 1, **dadurch gekennzeichnet, dass** das Metall der Platingruppe ausgewählt ist aus Platin, Iridium, Palladium, Ruthenium und Osmium.

3. Verfahren gemäß Anspruch 1 oder 2, **dadurch gekennzeichnet, dass** s gleich drei ist und das Metall der Platingruppe Iridium ist.

4. Verfahren gemäß Anspruch 3, **dadurch gekennzeichnet, dass** der Katalysator der Formel:
[Ir(R⁴)Hal]₂ (IV)
entspricht, wobei:
- das Symbol R⁴ einen ungesättigten Kohlenwasserstoffliganden darstellt, der mindestens eine Kohlenstoff=Kohlenstoff-Doppelbindung und/oder mindestens eine C≡C-Dreifachbindung umfasst, wobei diese ungesättigten Bindungen konjugiert oder nicht-konjugiert sein können und der Ligand linear oder zyklisch (mono- oder polyzyklisch) ist, 4 bis 30 Kohlenstoffatome aufweist, 1 bis 8 ethylenisch oder acetylenisch ungesättigte Bindungen aufweist und wahlweise ein oder mehrere Heteroatome umfasst.

5. Verfahren gemäß Anspruch 4, **dadurch gekennzeichnet, dass** der Katalysator ausgewählt ist aus:
Di-µ-chlorbis(divinyltetramethyldisiloxan)diiridium,
Di-µ-chlorbis(η-1,5-hexadien)diiridium,
Di-µ-brombis(η-1,5-hexadien)diiridium,
Di-µ-iodbis(η-1,5-hexadien)diiridium,
Di-µ-chlorbis(η-1,5-cyclooctadien)diiridium,
Di-µ-brombis(η-1,5-cyclooctadien)diiridium,
Di-µ-iodbis(η-1,5-cyclooctadien)diiridium,
Di-µ-chlorbis(η-2,5-norbornadien)diiridium,
Di-µ-brombis(η-2,5-norbornadien)diiridium, oder
Di-µ-iodbis(η-2,5-norbornadien)diiridium.

6. Verfahren gemäß den Ansprüchen 4 oder 5, **dadurch gekennzeichnet, dass** der Gehalt an Katalysator, berechnet auf das Gewicht des Katalysatormetalls, mehr als 30 ppm beträgt, berechnet bezüglich des Gesamtgewichts des Reaktionsgemisches aus den Produkten der Formeln (I), (II) und (III).

7. Verfahren gemäß einem der Ansprüche 1 bis 6, **dadurch gekennzeichnet, dass** im Fall, dass der Adsorptionsschritt mit dem Destillationsrückstand erfolgt, das Verfahren außerdem - nach dem Destillationsschritt des Reaktionsgemisches - den zusätzlichen Schritt umfasst, den flüssigen Rückstand mit Wasser, wahlweise in Gegenwart eines organischen Lösungsmittels, das gegenüber dem gebildeten HHal inert ist, in Kontakt gebracht wird mit dem Ziel, eine wässrige Phase und eine organische Phase zu erhalten und den Rückstand zu hydrolysieren.

8. Verfahren gemäß einem der vorigen Ansprüche, **dadurch gekennzeichnet, dass** das adsorbierende Mittel Aktivkohle ist.

9. Verfahren gemäß einem der Ansprüche 1 bis 7, **dadurch gekennzeichnet, dass** das adsorbierende Mittel ein Molekularsieb, eine Kieselsäure, aktiviertes Aluminiumoxid oder ein Ionenaustauschharz ist.

10. Verfahren gemäß Anspruch 7 oder 8, **dadurch gekennzeichnet, dass** das Wasser in ausreichender Menge zugegeben wird, so dass das gebildete HHal in der wässrigen Phase nicht gesättigt ist.

11. Verfahren gemäß einem der vorigen Ansprüche, **dadurch gekennzeichnet, dass** das Produkt der Formel (I) 3-Chlorpropyldimethylchlorsilan, das Produkt der Formel (II) Dimethylhydrogenchlorsilan und das Produkt der Formel (III) Allylchlorid ist.

12. Verfahren gemäß einem der vorigen Ansprüche, **dadurch gekennzeichnet, dass** die Adsorption diskontinuierlich (Batch-Verfahren) durchgeführt wird durch Inkontaktbringen des adsorbierenden Feststoffs in Form eines Pulvers oder Granulats mit dem Reaktionsgemisch oder dem Destillationsrückstand.

13. Verfahren gemäß einem der Ansprüche 1 bis 11, **dadurch gekennzeichnet, dass** die Adsorption kontinuierlich durchgeführt wird durch Inkontaktbringen eines adsorbierenden Feststoffs, der sich in einer Säule oder einem festen Bett oder einer Kartusche befindet, mit dem Reaktionsgemisch oder dem Destillationsrückstand.
